(19) Europäisches Patentamt
European Patent Office
Office européen des brevets

(11) **EP 3 838 947 A1**

(12) **EUROPÄISCHE PATENTANMELDUNG**

(43) Veröffentlichungstag:
**23.06.2021 Patentblatt 2021/25**

(51) Int Cl.:
***C08G 18/10*** *(2006.01)*     ***C08G 18/32*** *(2006.01)*
***C08G 18/73*** *(2006.01)*

(21) Anmeldenummer: **19216795.5**

(22) Anmeldetag: **17.12.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
**KH MA MD TN**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude 4825
51365 Leverkusen (DE)**

(54) **VERFAHREN ZUR HERSTELLUNG VON HYDROXY-TERMINIERTEN PREPOLYMEREN**

(57) Die vorliegende Erfindung betrifft ein Verfahren zur kontinuierlichen Herstellung von Hydroxy-terminierten Prepolymeren durch Umsetzung der Komponenten (A) einem oder mehreren cycloaliphatischen, aliphatischen und/oder araliphatischen Polyisocyanaten und (B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist. Das Verfahren umfasst die Verfahrensschritte: a) Herstellen einer Mischung aus der Komponente (A) und der Komponente (B); b) Vermischen der im Verfahrensschritt a) hergestellten Mischung mit einem aus Verfahrensschritt e) erhaltenen Prepolymer-Ausgangsteilstrom; c) Zur Reaktion bringen der Mischung aus Verfahrensschritt b); d) Aufteilen der in Schritt c) erhaltenen Reaktionsmischung in zwei Ausgangsteilströme und e) Entnehmen des verbleibenden Ausgangsteilstrom des Verfahrensschrittes d) enthaltend die Hydroxy-terminierten Prepolymere. Die Erfindung betrifft weiterhin Hydroxy-terminierte Prepolymere erhältlich oder erhalten durch das erfindungsgemäße Verfahren, sowie eine Zusammensetzung enthaltend die Hydroxy-terminierten Prepolymere und deren Verwendung.

**Beschreibung**

Die vorliegende Erfindung betrifft ein Verfahren zur kontinuierlichen Herstellung von Hydroxy-terminierten Prepolymeren durch Umsetzung der Komponenten (A) einem oder mehreren cycloaliphatischen, aliphatischen und/oder araliphatischen Polyisocyanaten und (B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist. Das Verfahren umfasst die Verfahrensschritte: a) Herstellen einer Mischung aus der Komponente (A) und der Komponente (B); b) Vermischen der im Verfahrensschritt a) hergestellten Mischung mit einem aus Verfahrensschritt e) erhaltenen Prepolymer-Ausgangsteilstrom; c) Zur Reaktion bringen der Mischung aus Verfahrensschritt b); d) Aufteilen der in Schritt c) erhaltenen Reaktionsmischung in zwei Ausgangsteilströme und e) Entnehmen des verbleibenden Ausgangsteilstrom des Verfahrensschrittes d) enthaltend die Hydroxy-terminierten Prepolymere. Die Erfindung betrifft weiterhin Hydroxy-terminierte Prepolymere erhältlich oder erhalten durch das erfindungsgemäße Verfahren, sowie eine Zusammensetzung enthaltend die Hydroxy-terminierten Prepolymere und deren Verwendung.

Hydroxy-terminierte Polyurethanprepolymere sind wichtige Komponenten in der Polyurethanchemie. Sie werden als OH-Komponente kombiniert mit Polyisocyanaten in ZweiKomponenten Lack- oder Klebstoffsystemen verwendet. Typische Anwendungsgebiete sind Klebstoffe für die Verpackungsindustrie oder auch Systeme zur Beschichtung von Leder oder Textilien (Kunststoff Handbuch Band 7, Polyurethane, G. Oertel, Hanser Verlag, S. 99ff).

Hydroxy-terminierte Polyurethanprepolymere, die aus kurzkettigen Diolen und Polyisocyanaten aufgebaut sind, weisen wertvolle Eigenschaften auf. Als Hartsegment-Bausteine eignen sie sich hervorragend zur Modifikation diverser Produkte und Werkstoffe. Problematisch ist, dass aufgrund der hohe Dichte an reaktiven Gruppen, die Polyaddition von kurzkettigen aliphatischen Diolen mit aliphatischen Polyisocyanaten eine hohe Wärmetönung bzw. Reaktionsenthalpie aufweist, was bei unzureichender Wärmeabfuhr zur Beschädigung, bspw. durch eine Verfärbung, bis hin zur Rückbildung von Monomeren und zur Zerstörung (Veraschung) des Polyurethanprepolymers führt.

In der industriellen Praxis werden kontinuierliche Herstellungsverfahren bevorzugt, da sich hier Maßstabsvergrößerungen einfacher durchführen lassen und größere Mengen mit konstanter Qualität produziert werden können. Die Verwendung von Lösungsmitteln ist ebenfalls nachteilig, da im Produkt verbleibende Restlösungsmittel in die Umwelt freigesetzt werden können und unerwünschte Eigenschaften wie beispielsweise Geruch, Toxizität und/oder eine Verschlechterung der mechanischen Eigenschaften verursachen können. Die vollständige Entfernung von Restlösungsmitteln aus einem Polymer ist grundsätzlich mit einem erhöhten technischen Aufwand und Energieverbrauch verbunden.

DE 10 2011 085 944 A1 beschreibt ein Verfahren zur Herstellung von thermoplastischem Polyurethan mit niedrigem Schmelzpunkt in einem Kreislaufreaktor. Die für das Verfahren benötigten hohen Reaktionstemperaturen fördern die Degradation des Polyurethans und erschweren die Abfuhr der Reaktionswärme von Umsetzungen mit hoher Wärmetönung bzw. machen eine Wärmeabfuhr unmöglich.

Ein Verfahren zur Herstellung von Polyurethan ist beispielsweise aus der WO01/14441 bekannt. Offenbart wird ein Verfahren zur Herstellung von NCO-, NH- oder OH-terminierten Polyurethanen in einem Statikmischer. Wesentlich für dieses Verfahren ist, dass die Temperatur bei der Umsetzung der Komponenten adiabat geführt wird und/oder der Statikmischer begleitbeheizt ist und damit nur für Verfahren geeignet ist, die endotherm sind oder nur eine geringe Exothermie aufweisen. Für die Umsetzung von Komponenten, die eine hohe Reaktionsenthalphie aufweisen, d.h. deren Umsetzung miteinander stark exotherm verläuft, ist das Verfahren nicht geeignet.

EP0519734 offenbart ein Urethanisierungsreaktionsverfahren, wobei ein Polyolgemisch, enthaltend mindestens ein langkettiges Polyol mit einer maximalen Hydroxylzahl von 10 mg/g KOH, mit einer Polyisocyanat-Komponente zu einem Urethan-modifizierten Harz umgesetzt wird. Die Reaktionsmischung wird in einem Statikmischer bei Temperaturen von 90 °C - 200 °C umgesetzt. Aufgrund der geringen Dichte an funktionellen Gruppen, ist auch hier ein Energieeintrag nötig.

Nachteilig bei den oben beschriebenen Verfahren ist, dass diese sich eher für Reaktionen eignen, die entweder endotherm verlaufen oder nur eine geringe Wärmetönung aufweisen und daher einen konstanten Wärmeeintrag erfordern oder adiabat gefahren werden müssen. Bei Systemen, die eine hohe Exothermie der Reaktion aufweisen ($\leq$ -350 kJ/kg), ist der adiabatische Temperaturanstieg problematisch. Ausgehend von Monomeren bei einer Temperatur ausreichend für ein unkatalysiertes Anspringen der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C über einen längeren Zeitraum ist aufgrund der Vielzahl von thermischen Nebenreaktionen problematisch. Eine Temperatur von 300 °C liegt darüber hinaus oberhalb der Ceiling Temperatur der Polyurethanbindung. Die Ceiling Temperatur ist als die Temperatur definiert, bei der die Depolymerisation im Gleichgewicht mit der Polymerisation steht.

Aufgabe der vorliegenden Erfindung war es daher, ein kontinuierliches und flexibles Verfahren zur Herstellung von Hydroxy-terminierten Prepolymeren bereitzustellen, das es ermöglicht Polyadditionsreaktion mit großer negativer Reaktionsenthalpie / kg Reaktionsmasse im industriellen Maßstab durchzuführen.

Diese Aufgabe wird gelöst durch ein Verfahren zur kontinuierlichen Herstellung von Hydroxy-terminierten Prepolymeren durch Umsetzung der Komponenten

(A) einem oder mehreren cycloaliphatischen, aliphatischen und/oder araliphatischen Polyisocyanaten,

(B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist"

(C) gegebenenfalls in Gegenwart von einem oder mehreren Katalysatoren, und/oder einem oder mehreren Zusatzstoffen,

wobei insgesamt ein molares Verhältnis von Komponente (A) zu Komponente (B) im Bereich von 0,6 : 1,0 bis 0,95 : 1,0 vorliegt, dadurch gekennzeichnet, dass das Verfahren die Schritte umfasst:

a) Herstellen einer Mischung aus der Komponente (A), der Komponente (B) und ggf. der Komponente (C);

b) Vermischen der im Verfahrensschritt a) hergestellten Mischung mit einem aus Verfahrensschritt e) erhaltenen Prepolymer-Ausgangsteilstrom;

c) Zur Reaktion bringen der Mischung aus Verfahrens schritt b);

d) Aufteilen der in Schritt c) erhaltenen Reaktionsmischung in zwei Ausgangsteilströme;

e) Rückführen eines Ausgangsteilstromes aus Verfahrensschritt d) als Eingangsteilstrom für die Mischung im Verfahrensschritt b);

f) Entnehmen des verbleibenden Ausgangsteilstrom des Verfahrensschrittes d) enthaltend die Hydroxy-terminierten Prepolymere.

Vorteilhafte Weiterbildungen sind in den Unteransprüchen angegeben. Sie können beliebig kombiniert werden, sofern sich aus dem Kontext nicht eindeutig das Gegenteil ergibt.

Überraschenderweise wurde gefunden, dass die Temperatur der Reaktionsmasse bei erfindungsgemäßer Ausführung sehr gut kontrolliert werden kann und es daher nicht zu wärmebedingten Schädigungen, wie z.B. Stippenbildung oder Verfärbungen im Polyurethanprepolymerprodukt kommt. Ebenfalls können durch die gute Temperaturkontrolle Nebenreaktionen kontrolliert und gegebenenfalls verhindert oder bevorzugt werden.

Denkbar ist beispielsweise eine enge Kontrolle der Degradation der Reaktionsmasse. Weiterhin ermöglicht das erfindungsgemäße Verfahren eine gute Skalierbarkeit vom Labor in einen industriellen Maßstab.

Das Wort "ein" im Zusammenhang mit zählbaren Größen ist im Rahmen der vorliegenden Erfindung nur dann als Zahlwort zu verstehen, wenn dies ausdrücklich angegeben wird (z. B. durch den Ausdruck "genau ein"). Wenn im Folgenden beispielsweise von "einem Diol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Diolen enthält.

"Kontinuierliches Verfahren" oder "kontinuierliche Verfahren" im Sinne der Erfindung sind solche, bei denen über die Zeit gesehen eine kontinuierliche Zuführung der Edukte zum Reaktionssystem erfolgt. Zudem wird das entstehende Produkt über die Zeit gesehen kontinuierlich aus dem Reaktionssystem entfernt. Insbesondere ist das kontinuierliche Verfahren ein kontinuierliches Kreislaufverfahren, in welchen mindestens eine, während des Verfahrens entstehende Komponente an einen anderen, im Prozessverlauf früheren Reaktionsort, gefördert wird. Die kontinuierliche Verfahrensweise ist meistens von wirtschaftlichem Vorteil, da Reaktorstillstandszeiten infolge von Befüllungs- und Entleerungsprozessen vermieden werden.

Dem Fachmann ist bekannt, dass in der Polyurethanchemie Polymere und damit auch Prepolymere nicht als isolierte Spezies vorliegen, sondern immer als Gemische von Molekülen verschiedener Anzahl von Wiederholeinheiten und damit unterschiedlichen Molekulargewichten und gegebenenfalls auch unterschiedlicher Endgruppen vorliegen. Sowohl die Anzahl der Wiederholeinheiten pro Molekül als auch gegebenenfalls die Endgruppen sind in der Regel statistisch verteilt.

Im Rahmen der vorliegenden Erfindung wird unter dem Begriff "Hydroxy-terminiertes Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere Hydroxy-Gruppen, NCO-Gruppen und/oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

In Rahmen der vorliegenden Erfindung wird unter einem "nicht-reaktiv terminierten Prepolymer" oder einem "nicht-reaktiv terminierten Polymer" ein Prepolymer bzw. Polymer verstanden, bei dem die reaktiven Gruppen (NCO-Gruppen oder OH-Gruppen) durch Reaktion mit geeigneten Reaktionspartnern (Kettenabbrecher) in chemische Gruppen umgewandelt wurden, die unter den genannten Reaktionsbedingungen weder mit NCO-Gruppen, noch mit OH-Gruppen reagieren. Als Kettenabbrecher eignen sich beispielsweise Mono-Alkohole wie Methanol, Mono-Amine wie Diethylamin und Monoisocyanate wie Butylisocyanat. Der molare Anteil der Kettenabbrecher kann beispielsweise von 0,001 mol-% bis 2 mol-% und bevorzugt von 0,002 mol-% bis 1 mol-% betragen, jeweils bezogen auf die Gesamtstoffmenge der entsprechenden Monomerkomponente.

Unter Polyisocyanaten werden in diesem Zusammenhang organische Verbindungen mit zwei oder mehr Isocyanatgruppen verstanden, wobei es unerheblich ist, ob diese mittels Phosgenierung oder nach phosgenfreien Verfahren erhalten wurden. Beispiele für geeignete Polyisocyanate mit drei Isocyanatgruppen sind Triphenylmethan-4,4',4"-triisocyanat oder Isocyanatomethyl-1,8-octandiisocyanat (TIN).

Im Rahmen der vorliegenden Erfindung wird unter dem Begriff "Polyol" jede organische monomere oder polymere Substanz verstanden, die zwei oder mehr Hydroxylgruppen aufweist, welche in der Lage sind mit einer NCO-Gruppe zu reagieren.

Bevorzugt bedeuten erfindungsgemäß die Ausdrücke "umfassend" oder "enthaltend", "im Wesentlichen bestehend aus" und besonders bevorzugt "bestehend aus".

Im Verfahrensschritt a) erfolgt das Herstellen einer Mischung aus der Komponente (A), der Komponente (B) und gegebenenfalls der Komponente (C). In diesem Schritt werden die einzelnen Monomer-Komponenten und gegebenenfalls die Komponente (C) unter Rühren oder den Einsatz von Scherkräften zusammengegeben, so dass eine Verteilung der einen in der anderen Komponente erhalten wird. Je nach der gegenseitigen Löslichkeit der Komponenten kann die Mischung ein- oder mehrphasig vorliegen, für die meisten Stoffsysteme wird sie zweiphasig vorliegen. Zweckmäßigerweise kann dieser Verfahrensschritt bei einer Temperatur erfolgen, in welcher die beiden Komponenten noch nicht im nennenswerten Umfang miteinander reagieren. Die Monomere reagieren noch nicht im nennenswerten Umfang, wenn mindestens 70 Mol-%, bevorzugt mindestens 90 Mol-%, noch bevorzugter mindestens 98 Mol-% der reaktionsfähigen Monomere noch nicht miteinander reagiert haben. Die Temperaturen können zum Erhalt der Mischung der Monomere beim Vermischen in einem Temperaturbereich von beispielsweise 20 °C bis 100 °C gehalten werden. Bevorzugt kann die Verweilzeit bei diesem Mischvorgang, bevor die Mischung in den nächsten Prozessschritt übergeht, kleiner als eine Minute, bevorzugt kleiner als 10 Sekunden gehalten werden.

Im Verfahrensschritt b) erfolgt das Vermischen der im Verfahrensschritt a) hergestellten Mischung mit einem aus Verfahrensschritt e) erhaltenen Prepolymer-Ausgangsteilstrom. In diesem Verfahrensschritt wird also eine im Wesentlichen aus Monomeren der Komponenten (A) und (B) bestehende Mischung mit einem Strom aus einer späteren Prozessphase vermischt, welcher im Wesentlichen nicht aus Monomeren der Komponenten (A) und (B), sondern aus Prepolymeren beider Monomere besteht. Prepolymere sind dabei Reaktionsprodukte aus der Reaktion von Monomeren der Komponente (A) mit Monomeren der Komponente (B), wobei der durchschnittliche Polymerisationsgrad n der Prepolymere in einem Bereich von 5 bis 19, bevorzugt im Bereich von 2 bis 9 und besonders bevorzugt im Bereich von 3,2 bis 6 liegt wobei $n = \frac{x}{1-x}$ ist, und wobei $x$ das Verhältnis der Isocyanat-Gruppen der Komponente (A) zu den Hydroxy-Gruppen der Komponente (B) ist.

Bei den Prepolymeren handelt es sich vorzugsweise im Wesentlichen um Hydroxy-terminierte Prepolymere. "Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-% der Prepolymere Hydroxy-terminierte Prepolymere sind.

Im Verfahrensschritt c) erfolgt das zur Reaktion Bringen der Mischung aus Verfahrensschritt b). Das zur Reaktion bringen beinhaltet dabei, dass aus den einzelnen Monomeren der Komponenten (A) und (B) größere Moleküle durch Polyaddition entstehen. Das zur Reaktion bringen führt aber nicht zwangsläufig dazu, dass die gesamten vorliegenden Monomere in Polymerketten eingebaut werden. Wenn ein Überschuss an Komponente (B) vorliegt, wird vor allem noch Komponente (B) in der entstehenden Reaktionsmischung vorliegen. Bevorzugt liegt der Restgehalt an Monomeren bezogen auf die gesamte Stoffmenge an allen eingesetzten Monomeren, welche nicht in Ketten eingebaut ist, in einem Bereich von 0,12 Mol-% bis 16 Mol-% , bevorzugt in einem Bereich von 0,52 Mol-% bis 12 Mol-% und noch bevorzugter in einem Bereich von 7,6 Mol-% bis 1,1 Mol-%. Zweckdienlicherweise kann die Mischung in diesem Schritt über geeignete Verfahrensmittel temperiert werden.

Im Verfahrensschritt d) erfolgt das Aufteilen der in Schritt c) erhaltenen Reaktionsmischung in zwei Ausgangsteilströme. Nach Bildung der Prepolymere aus den Monomeren der Komponenten (A) und (B) wird die erhaltene Reaktionsmischung im Ausgang dieser Reaktionsstufe aufgeteilt und über zwei unterschiedliche Leitungen an zwei verschiedene Reaktionsorte geleitet. Eine Leitung enthält einen Teil des Ausgangsstromes und führt diesen in eine frühere Verfahrensstufe im Kreis zurück, während der restliche Teil in den folgenden Verfahrensschritt gegeben wird. Ersteres ist Teil des Verfahrensschrittes e), in welchem das Rückführen eines Ausgangsteilstromes aus Verfahrensschritt d) als Eingangsteilstrom für die Mischung im Verfahrensschritt b) erfolgt. Ein Teil des Prepolymers aus der Verfahrensstufe d) wird also in den Verfahrensschritt b), also zur noch nicht reagierten Mischung der Monomere der Komponenten (A) und (B) gegeben.

Die Restmenge des Ausgangsstromes aus dem Verfahrensschritt d) wird im Verfahrensschritt f) entnommen und enthält die Hydroxy-terminierten Prepolymere.

Als Komponente (A) eignen sich alle dem Fachmann bekannten aliphatischen, cycloaliphatischen, und/oder araliphatischen Polyisocyanate, insbesondere monomere Diisocyanate. Geeignete Verbindungen sind vorzugsweise solche des Molekulargewichtsbereiches von ≥ 140 g/mol bis ≤ 400 g/mol, wobei es unerheblich ist, ob diese mittels Phosgenierung oder nach phosgenfreien Verfahren erhalten wurden. Die Polyisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin hergestellt, welches aus biologischen Quellen gewonnen wird. Wenn im Rahmen der vorliegenden Erfindung von Komponente (A) gesprochen wird, kann es sich auch um ein Gemisch von mindestens zwei Komponenten (A) handeln.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

In einer bevorzugten Ausführungsform des erfindungsgemäßen Verfahrens werden als Komponente (A) ein oder mehrere cycloaliphatischen, aliphatischen und/oder araliphatischen, monomere Diisocyanate eingesetzt. Vorzugsweise werden als Komponente (A) ein oder mehrere aliphatische und / oder cycloaliphatische, monomere Diisocyanate mit einem Molekulargewicht im Bereich von ≥ 140 g/mol bis ≤ 400 g/mol eingesetzt.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

In einer weiteren bevorzugten Ausführungsform des erfindungsgemäßen Verfahrens werden als Komponente (A) ein oder mehrere monomere Diisocyanate eingesetzt, ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus, vorzugsweise ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und besonders bevorzugt ausgewählt aus der Gruppe bestehend aus 1,5-Diisocyanatopentan (PDI), 1,6-Diisocyanatohexan (HDI) und/oder Mischungen aus mindestens 2 hieraus.

Als Komponente (B) werden erfindungsgemäß eine oder mehrere cycloaliphatische, aliphatische und/oder araliphatische Polyole mit einer Hydroxylzahl von 600 mg KOH/g bis 1830 mg KOH/g, bestimmt gemäß DIN EN ISO 4629-2:2016, eingesetzt. Die Polyole und / oder dessen Vorläuferverbindungen können aus fossilen oder biologischen Quellen gewonnen worden sein. Die aliphatischen Polyole umfassen insbesondere auch heteroaliphatische Polyole, d.h. Polyole bei denen CH-Gruppen und / oder CH$_2$-Gruppen der aliphatische Kette durch Heteroatome wie N, S oder O ersetzt sind. Beispiele für erfindungsgemäße heteroaliphatische Polyole sind Ethylenglykol, Butylenglykol, Diethylenglykol, HOCH$_2$CH$_2$SCH$_2$CH$_2$OH, N(CH$_2$OH)$_3$ und HOCH$_2$N(CH$_3$)CH$_2$OH. Weitere Beispiele für geeignete Polyole sind, 1,2-Propandiol, 1,3-Propandiol, 1,3-Butandiol, 1,4-Butandiol, 1,6-Hexandiol und Isomere, Neopentylglykol, Trimethylolpropan, Glycerin, Erythrit, Pentaerythrit, Trimethylolbenzol oder Trishydroxyethylisocyanurat.

In einer bevorzugten Ausführungsform des erfindungsgemäßen Verfahrens werden als Komponente (B) eine oder mehrere cycloaliphatische, aliphatische und/oder araliphatische Polyole mit einer Hydroxylzahl von 600 mg KOH/g bis 1830 mg KOH/g bestimmt gemäß DIN EN ISO 4629-2:2016 eingesetzt, vorzugsweise werden als Komponente (B) ein oder mehrere cycloaliphatische und / oder aliphatische Diole, mit einer Hydroxylzahl von 600 mg KOH/g bis 1830 mg KOH/g bestimmt gemäß DIN EN ISO 4629-2:2016, eingesetzt.

In einer weiteren bevorzugten Ausführungsform des erfindungsgemäßen Verfahrens werden als Komponente (B) ein oder mehrere Diole eingesetzt, ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol und/oder Mischungen aus mindestens 2 hieraus.

In einer weiteren bevorzugten Ausführungsform des erfindungsgemäßen Verfahrens werden die Hydroxy-terminierten Prepolymere im Wesentlichen durch Polyaddition von Kombinationen aus Komponente (A) und Komponente (B) gebildet ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3-und/oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol, 1,6-Diisocyanatohexan mit 1,5-Pentandiol und 1,6-Diisocyanatohexan mit 1,6-Hexandiol, vorzugsweise ausgewählt werden aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2-und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und/oder 1,3-Propandiol und 1,6-Diisocyanatohexan mit 1,2-, 1,3- und/oder 1,4-Butandiol, besonders bevorzugt ausgewählt werden aus der Gruppe bestehend aus 1,5-Diisocyanatopentan mit 1,2- Butandiol, 1,3- Butandiol, 1,4-Butandiol und / oder Mischungen aus mindestens 2 hieraus und 1,6-Diisocyanatohexan mit 1,2- Butandiol, 1,3-Butandiol, 1,4-Butandiol und / oder Mischungen aus mindestens 2 hieraus.

In einer weiteren bevorzugten Ausführungsform des erfindungsgemäßen Verfahrens werden die Hydroxy-terminierten Prepolymere vorzugsweise durch Umsetzung von im Wesentlichen 1,6-Diisocyanatohexan mit 1,4- Butandiol erhalten

"Im Wesentlichen" bedeutet in diesem Zusammenhang, dass mindestens 95 mol-%, vorzugsweise mindestens 98 mol-%, besonders bevorzugt mindestens 99 mol-% und noch bevorzugter mindestens 99,5 mol-%, noch mehr bevorzugt mindestens 99,8 mol-% und am Bevorzugtesten 100 mol-% der Hydroxy-terminierte Prepolymere aus den genannten Monomer-Komponenten (A) und (B) aufgebaut sind.

In einer weiteren bevorzugten Ausführungsform des erfindungsgemäßen Verfahrens weisen die Hydroxy-terminierten Prepolymere eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 auf.

Im erfindungsgemäßen Verfahren können die Komponenten (A) und (B) gegebenenfalls in Gegenwart von einem oder mehreren Katalysatoren und/oder Zusatzstoffen umgesetzt werden, vorzugsweise in Gegenwart von einem oder mehreren Schwermetall-freien Katalysatoren und/oder Zusatzstoffen.

Zur Reaktionsbeschleunigung können beispielsweise übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandi-amin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-ß-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl-und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; Amidine, wie z. B. 2,3-Dimethyl-3,4,5,6-tetra-hydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugt unter den Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche Schwermetall-freie Katalysatoren.

Im Allgemeinen wird der Katalysator in Mengen von 0,001 bis 2,0 Gew.-%, bevorzugt von 0,005 bis 1,0 Gew.-% besonders bevorzugt von 0,01 bis 0,1 Gew.-% bezogen auf die Komponente (A) eingesetzt. Der Katalysator kann in Substanz eingesetzt werden oder gelöst in der Komponente (B). Ein Vorteil ist hierbei, dass die dann erhaltenen Hydroxy-terminierten Prepolymere keine Verunreinigungen durch gegebenenfalls mitverwendete Katalysatorlösungsmittel enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3-Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch beim erfindungsgemäßen Verfahren Katalysatorlösungsmittel zum Einsatz kommen, die gegenüber Isocyanaten reaktive Gruppen tragen und in das Prepolymer eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.In einer bevorzugten Ausführungsform werden die Komponenten (A) und (B) im erfindungsgemäßen Verfahren ohne einen Katalysator miteinander umgesetzt. Es wurde festgestellt, dass sich die Hydroxy-terminierten Prepolymere ohne Einsatz von Polymerisationskatalysatoren erhalten lassen. Dies ist überraschend, da üblicherweise zum Erhalt eines homogenen Prepolymers Katalysatoren eingesetzt werden.

Neben den Komponenten (A) und (B) sowie den Katalysatoren können auch Zusatzstoffe eingesetzt werden. Dabei kann es sich beispielsweise um im Bereich der Polyurethantechnologie gängige Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Zusatzstoffe mehrerer Typen zu verwenden.

In einer bevorzugten Aufführungsform können als Zusatzstoffe auch geringe Mengen aromatischer Diisocyanate eingesetzt werden in Anteilen bis zu 2 Gew.-% bezogen auf die Stoffmenge der Komponente (A). Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

In einer bevorzugten Ausführungsform werden keine aromatischen Diisocyanate und keine Polyisocyanate (gemäß obiger Definition) im erfindungsgemäßen Verfahren eingesetzt.

In einer anderen bevorzugten Ausführungsform können als Zusatzstoffe in geringen Mengen auch übliche gegenüber Isocyanaten reaktive mono-, di-, tri- oder polyfunktionelle Verbindungen in Anteilen bis zu 2 mol%, bezogen auf das Gesamtgewicht des Prepolymers bzw. der Prepolymere, z. B. als Kettenabbrecher, Hilfsmittel oder Entformungshilfen, eingesetzt werden. Beispielhaft genannt seien Alkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol und Stearylalkohol. Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Amine wie Butylamin und Stearylamin oder Thiole. Diese Zusatzstoffe können bis zu einer Menge zugesetzt werden, bei der die erfindungsgemäßen Grenzen der OH-Funktionalität eingehalten werden.

In einer bevorzugten Ausführungsform des erfindungsgemäßen Verfahrens erfolgt die Umsetzung der Komponenten (A), (B) und ggf. (C) lösungsmittelfrei.

Unter einem "lösungsmittelfreien Verfahren" im Rahmen der vorliegenden Erfindung wird die Umsetzung der Komponenten (A) und (B) ohne zusätzliche Verdünnungsmittel, wie beispielsweise organische Lösungsmittel oder Wasser verstanden, d.h. die Komponenten (A) und (B) werden bevorzugt unverdünnt miteinander zur Reaktion gebracht. Die Komponente (C) kann gegebenenfalls in geeigneten Verdünnungsmittel vorliegen und als Lösung oder Dispersion zu den Komponenten (A) und/oder (B) zugegeben werden. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt. Unter einem Lösungsmittel wird dabei eine Substanz verstanden in der wenigstens eine der Komponenten (A) und (B) und gegebenenfalls (C) gelöst, dispergiert, suspendiert oder emulgiert werden kann, welche aber nicht mit einer der Komponenten (A) und (B) und gegebenenfalls (C) oder mit dem/den Hydroxy-terminierten Prepolymeren reagiert. Im Rahmen der vorliegenden Erfindung, wird ein nicht-reaktiv terminiertes Prepolymer und/ oder nicht-reaktiv terminiertes Polymer, welche nicht mit einer der Komponenten (A) und (B) und gegebenenfalls (C) oder mit dem/den Hydroxy-terminierten Prepolymeren der Reaktionsmischung reagieren, nicht als "Lösungsmittel" angesehen.

In einer weiteren bevorzugten Ausführungsform des erfindungsgemäßen Verfahrens beträgt die Temperatur im Verfahrensschritt a) größer oder gleich 25 °C und kleiner oder gleich 60 °C. Zum Erhalt einer möglichst gleichmäßigen Mischung der Monomeren der Komponenten (A) und (B) mit einer niedrigen Anzahl schon anreagierter Monomere hat sich oben angegebener Temperaturbereich als besonders geeignet herausgestellt. Niedrigere Temperaturen können unvorteilhaft sein, da die Viskosität der Bestandteile dann zu hoch und nur eine nicht ausreichende Vormischung erhältlich ist. Höhere Temperaturen können nachteilig sein, da dann der Anteil schon anreagierter Monomere zu groß wird. Bevorzugte Temperaturbereiche innerhalb dieses Schrittes können bevorzugt zwischen größer oder gleich 35 °C und kleiner oder gleich 55 °C, noch bevorzugter zwischen größer oder gleich 40 °C und kleiner oder gleich 50 °C liegen.

In einer weiteren bevorzugten Ausführungsform des erfindungsgemäßen Verfahrens beträgt die Temperatur im Verfahrensschritt c) größer oder gleich 170 °C und kleiner oder gleich 190 °C. Zur Ausbildung einer ausreichenden und geeigneten Prepolymer-Konzentration und-Zusammensetzung hat sich oben angegebener Temperaturbereich als besonders geeignet herausgestellt. Ohne durch die Theorie gebunden zu sein scheint es, dass sich innerhalb angemessener Verweilzeiten eine enge Molekularmassenverteilung an reagierten Prepolymeren ergibt. Bevorzugt können diese Prepolymere mit einer Verweilzeit im oben angegebenen Temperaturbereich von 5 Minuten bis zu 35 Minuten erhalten werden.

In einer weiteren bevorzugten Ausführungsform des erfindungsgemäßen Verfahrens beträgt das Gewichtsverhältnis der im Verfahrensschritt b) zurückgeführten Prepolymere bezogen auf die Menge an eingesetzter Mischung aus Komponente (A) und Komponente (B) größer oder gleich 10 und kleiner oder gleich 30. Ohne durch die Theorie gebunden zu sein kann dieses Rücklauf- zu Monomerdosierungs-Verhältnis einen besonders hohen Einfluss auf die Temperaturführung haben. Im speziellen ist es außerdem sehr vorteilhaft, dass die Temperatur in diesem Verfahrensschritt innerhalb enger Grenzen gehalten wird. Die minimale Temperatur in diesem Verfahrensschritt liegt typischerweise nach der Mischung der Monomere mit dem Prepolymer und die maximale Temperatur am Ausgang der Verfahrensstufe vor. An dieser Stelle kann beispielsweise eine Kühlung vorgesehen sein. Bevorzugt kann die Temperaturdifferenz zwischen diesen Punkten maximal 20 K, besonders bevorzugt kleiner als 10 K betragen.

In einer weiteren bevorzugten Ausführungsform des erfindungsgemäßen Verfahrens werden mindestens die Verfahrensschritte b), c), d) und e) in einem Kreislaufreaktor durchgeführt.

In einer weiteren bevorzugten Ausführungsform des erfindungsgemäßen Verfahrens verfügt der Kreislaufreaktor über eine Druckregelung, wobei der Druck im Bereich von 2 bar absolut bis 11 bar absolut eingestellt wird. "Bar absolut" im Sinne der Erfindung bedeutet den Druck gegenüber dem Druck Null im leeren Raum (Vakuum). Der Überdruck hat den Vorteil, dass gasförmige Nebenkomponenten wie beispielsweise Restluft, Stickstoff oder Kohlendioxid, die mit den Komponenten (A), (B) und gegebenenfalls (C) mit in den Reaktor mit eingetragen werden, und niedrig flüchtige Komponenten, die bei der Reaktion entstehen können, wie beispielsweise Tetrahydrofuran durch Zyklisierung von Butandiol, in der flüssigen Phase gehalten werden, so dass das Volumen der im Kreislaufreaktor befindlichen Masse nicht durch Expansion oder Kontraktion von Gasblasen im Reaktor schwankt und dadurch der Masseaustrag ungleichmäßig wird.

Die Bestimmung bzw. Berechnung der Viskosität erfolgt bevorzugt im Prozess, beispielweise anhand der Messung von Druckverlusten in Rohrleitungsstücken oder in Statikmischern. Für kreisförmige Rohrleitungsstücke kann für laminare Strömung die Hagen-Poiseuille - Gleichung zur Berechnung von Druckverlusten ($\Delta p$ in Pascal) in der Form

$$\Delta p = \frac{128}{\pi} \frac{\dot{V}}{D^3} \eta \frac{L}{D}$$

($\dot{V}$ Volumenstrom in Kubikmeter pro Sekunde, D Innendurchmesser des durchströmten Rohres in Metern, $\pi \approx 3.14159$ ... Kreiszahl, L Länge des Rohres in Metern, $\eta$ Viskosität in Pascal mal Sekunden) umgestellt werden zu der Bestimmungsgleichung für die Viskosität

$$\eta = \frac{\pi}{128} \frac{D^4}{\dot{V} L} \Delta p$$

In einer weiteren bevorzugten Ausführungsform des erfindungsgemäßen Verfahrens liegt die Viskosität des Stoffstroms in dem Kreislaufreaktor unterhalb von 10 Pa·s, bevorzugt unterhalb von 3 Pa·s, besonders bevorzugt unterhalb von 1 Pa·s bei einer Messtemperatur von 190 °C und einer Frequenz von 10 Hz bestimmt gemäß ISO 6721-10:2015.

In einer weiteren bevorzugten Ausführungsform des erfindungsgemäßen Verfahrens weist der Kreislaufreaktor mindestens einen Wärmeübertrager auf mit einem Wärmeübertragungsvermögen, bezogen auf das gesamte Volumen des Kreislaufreaktors, von mehr als 10 kW/(m³·K), bevorzugt von mehr als 15 kW/(m³·K) und ganz besonders bevorzugt von mehr als 18 kW/(m³·K).

In einer weiteren bevorzugten Ausführungsform des erfindungsgemäßen Verfahrens weist der Kreislaufreaktor mindestens einen Wärmeübertrager auf und das Verhältnis von Wärmeübertrageroberfläche zu Kreislaufreaktoroberfläche beträgt > 0,3, vorzugsweise > 0,5 und bevorzugter > 0,65.

In einer weiteren bevorzugten Ausführungsform des erfindungsgemäßen Verfahrens weist die Wärmeübertrageroberfläche im Reaktor einen durchschnittlichen k-Wert von > 50 W/(m²·K), vorzugsweise > 100 W/(m²·K) und bevorzugter > 250 W/(m²·K) auf.

Die Erfindung betrifft weiterhin Hydroxy-terminierten Prepolymere erhältlich oder erhalten durch das erfindungsgemäße Verfahren. In einer bevorzugten Ausführungsform werden die Hydroxy-terminierten Prepolymere durch Umsetzung von im Wesentlichen 1,6-Diisocyanatohexan mit 1,4-Butandiol erhalten. "Im Wesentlichen" bedeutet in diesem Zusammenhang, dass mindestens 95 mol-%, vorzugsweise mindestens 98 mol-%, besonders bevorzugt mindestens 99 mol-% und noch bevorzugter mindestens 99,5 mol-%, noch mehr bevorzugter mindestens 99,8 mol-% und am Bevorzugtesten 100% mol-% der Hydroxy-terminierte Prepolymere aus den Monomeren 1,6-Diisocyanatohexan und 1,4- Butandiol aufgebaut sind.

In einer bevorzugten Ausführungsform weisen die Hydroxy-terminierten Prepolymere eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 auf.

In einer weiteren Ausführungsform der Erfindung sind die Hydroxy-terminierten Prepolymere katalysatorfrei. Dies ist überraschend, da üblicherweise zum Erhalt eines homogenen Prepolymers Katalysatoren eingesetzt werden. Die erfindungsgemäßen Hydroxy-terminierten Prepolymere sind katalysatorfrei, wenn die Menge an Katalysator kleiner als 1,0 Gew.-%, bevorzugt kleiner als 0,5 Gew.-%, noch bevorzugter kleiner als 0,1 Gew.-% beträgt.

Die Erfindung betrifft weiterhin eine Zusammensetzung enthaltend mindestens erfindungsgemäße Hydroxy-terminierte Prepolymere und mindestens ein Additiv.

Bei dem Additiv kann es sich beispielsweise um im Bereich der Thermoplasttechnologie gängige Additive wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Additive sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Additive mehrerer Typen zu verwenden.

Die Erfindung betrifft weiterhin die Verwendung von den erfindungsgemäßen Prepolymeren oder einer erfindungsgemäßen Zusammensetzung zur Herstellung von thermoplastischem Polyurethan.

Zur Erzeugung von thermoplastischem Polyurethan werden die erfindungsgemäßen Prepolymeren oder die erfindungsgemäßen Zusammensetzung mit geeigneten Kettenverlängerern umgesetzt wie beispielsweise Polyisocyanaten. Die erfindungsgemäßen Prepolymere und Kettenverlängerer werden dazu in einen molaren Verhältnis von Prepolymer zu Kettenverlängerer im Bereich von 0,9 : 1,0 bis 1,1 : 1,0 umgesetzt. Die Umsetzung erfolgt beispielsweise in Innenknetern, Extrudern und Doppelwellenschnecken.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung einzuschränken. Es zeigen die:

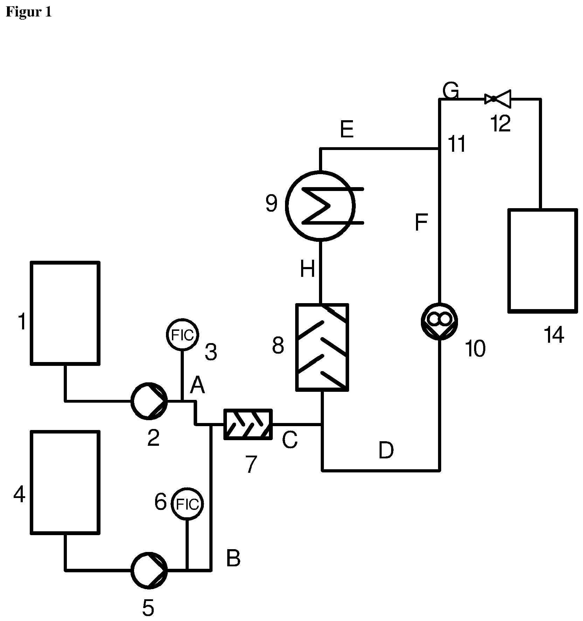

Fig. 1 einen möglichen Aufbau zur kontinuierlichen Herstellung der erfindungsgemäßen Hydroxy-terminierten Prepolymere. Aus der HDI-Vorlage 1 wird mittels einer Pumpe 2 der HDI-Strom (Strom A) entnommen. Die entnommene Menge kann über einen Massedurchflussmesser 3 gemessen und gegebenenfalls über Rückwirkung auf die Pumpe 2 geregelt werden. werden. Ein ähnlicher Aufbau ergibt sich für die BDO-Vorlage 4 mit BDO-Pumpe 5 und Durchflussmesser 6 (Strom B). Beide Ströme A und B werden in den Statikmischer 7 gefördert und miteinander zum Strom C vermischt. Strom C wird in mit einem umlaufenden Oligomerstrom D in den temperierbaren Mischern 8, 9 zum Strom E gemischt wobei der Strom E in den Mischern 8, 9 und in den Rohrleitungen reagiert. Der Strom E wird an der Verzweigung 11 in zwei Teilströme (Strom G, F) aufgeteilt. Hinter dem Druckhalteventil 12 wird der Strom G, enthaltend die erfindungsgemäßen Hydroxy-terminierten Prepolymere, in den Behälter 14 gefahren, wo er aufgefangen und abgekühlt wird. Alternativ kann der Strom G auf einen Extruder geleitet werden der anstelle von Behälter 14 angeschlossen wird.

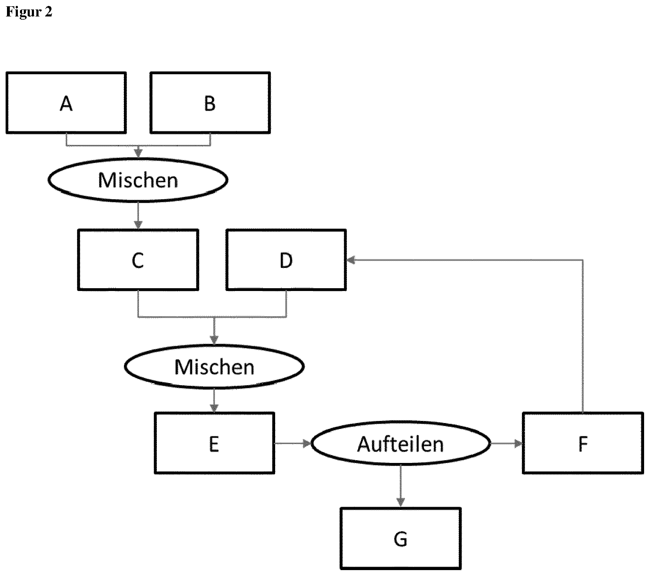

Die Figur 2 zeigt schematisch die Abfolge und die Stoffströme des erfindungsgemäßen Verfahrens. Strom A und B sind Eduktströme, wobei eingesetzte die HDI-Menge über Strom A zugegeben wird. Das BDO wird nur über den Strom B ins Verfahren eingeführt. Die Ströme A und B werden gemischt (1) (Strom C), Strom C wird dann mit dem Strom D gemischt, wobei Strom D durch Rückführung des Stroms F entsteht. Die Mischung der Ströme C und D ist Strom E. Dieser wird aufgeteilt, wobei einer der Teilströme (Strom F) zurückgeführt, d.h. im Kreis gefahren, wird. Der andere Teilstrom (Strom G) wird aus dem Verfahren entfernt. Man erhält also ein Kreislaufverfahren.

## Beispiele

Alle Prozentangaben beziehen sich, soweit nichts Anderslautendes vermerkt, auf das Gewicht.
Die zur Zeit der Versuchsdurchführung herrschende Umgebungstemperatur von 25 °C wird als RT (Raumtemperatur) bezeichnet.

## Farbwerte

Die Farbwerte im CIE-Lab Farbraum wurden mit einem Konica Minolta CM5 Spektralphotometer, mit der Lichtart D 65, bei 10° Beobachter gemäß DIN EN ISO 11664-1 (Juli 2011) bestimmt.

## I. Verwendete Rohstoffe

1,6-Hexamethylendiisocyanat (HDI, Reinheit ≥ 99 Gew.-%) wurde von der Covestro AG bezogen. 1,4-Butandiol (BDO, Reinheit ≥ 99 Gew.-%) wurde von der Firma Ashland bezogen.

## II. Erfindungsgemäßes Verfahren:

Aus einer Vorlage wurde 1,6-Hexamethylendiisocyanat (HDI) mittels einer Pumpe bei Raumtemperatur zu einem Statikmischer gefördert (Strom A). Aus einer weiteren Vorlage wurde auf ca. 40 °C temperiertes 1,4-Butandiol (BDO) mittels einer Pumpe ebenfalls zum Durchlaufmischer gefördert (Strom B). Der Durchsatz des HDI-Stroms A und des BDO-Stroms B wurde mittels Massedurchflussmesser verfolgt. Im Mischer 7 wurden der HDI-Strom A und der BDO-Strom B zur Dispersion HDI/BDO vermischt/dispergiert (Strom C).
Der HDI/BDO-Strom C wird im Umlauf mit einem 182 °C heißen Prepolymerstrom D in einem Mischer zusammengeführt und gemischt (Strom E). Durch die Temperatur des Prepolymerstroms D kommt es zu einer Reaktion zwischen HDI und BDO, welche durch weiteres Vermischen in einem temperierbaren Mischer unter Bildung von Prepolymeren und unter Abfuhr der Reaktionswärme fortgeführt wird. Die Heizmitteltemperatur am Eintritt beträgt ca. 180 °C. Aus dem temperierbaren Mischer wird ein Ausgangsstrom als weitgehend ausreagierter HDI/BDO-Prepolymerstrom mit einer Temperatur von 183 °C erhalten (Strom E). Der temperierbare statische Mischer war ähnlich aufgebaut wie ein Sulzer SMR-Reaktor mit innenliegenden, gekreuzten Rohren. Er hatte ein Innenvolumen von 2,2 Litern und eine Wärmeaustauschfläche von 0,31 Quadratmeter. Sein Wärmeaustauschvermögen, bezogen auf die Produktseite, betrug unter den Betriebsbedingungen 78 Watt pro Kelvin. Bezogen auf das gesamte Volumen des Kreislaufreaktors von 4 Liter, betrug der Wärmeübergangskoeffizient 19 Kilowatt pro Kubikmeter und Kelvin. Das Verhältnis der Wärmeübertragungsfläche zur Gesamtfläche betrug 0,655. Die mittlere OH-Funktionalität betrug genau 2. Der k-Wert betrug 251 W/(m$^2 \cdot$K). Der Strom E wird mittels einer Verzweigung in zwei Teilströme F und G aufgespalten, wobei der Teilstrom F als Prepolymerstrom D mittels einer Pumpe in auf ca. 182 °C beheizten Rohrleitungen zum oben erwähnten Mischer zurückgeführt wird. Der Massenstrom des Stroms G entspricht dem Massenstrom des Stroms C. Der Massenstrom des Stroms G betrug ca. 115 L/h. Der Teilstrom G wird in einem 60 L - Fass aufgefangen und abgekühlt. Das entstehende Produkt ist kristallin und weiß. Die Gesamtmenge des hergestellten Prepolymers beträgt 50 kg. Der Druck im Kreislaufreaktor lag im Bereich von 4 bar absolut bis 8 bar absolut. Eine Farbzahlmessung ergab einen L-Wert von 92,2, einen a-Wert von 0,7 und einen b-Wert von 1,7. Die Viskosität des Produktes bei 190°C betrug 0,7 Pa s.

Im erfindungsgemäßen Beispiel wurden folgende Edukt-Ströme eingesetzt:

|          |     | kg/h  | Mol/h  |
|----------|-----|-------|--------|
| Strom A  | HDI | 2,911 | 17,306 |
| Strom B  | BDO | 2,000 | 22,193 |

### IV. Nicht erfindungsgemäßes Vergleichsbeispiel:

In dem nicht erfindungsgemäßen Vergleichsbeispiel wurde eine Dosierrate realisiert, wie sie in einem großen Produktionsprozess im Semi-Batch möglich wäre. In einem Reaktionsgefäß wurden 60 Gramm Butandiol unter Stickstoff vorgelegt und auf 100°C erwärmt. Daraufhin wurde über einen Zeitraum von 413 Minuten 87,22 Gramm HDI mit konstanter Dosierrate hinzudosiert. Die Temperatur des Reaktionsproduktes betrug dabei 210°C. Anschließend wurde noch für 20 Minuten nachgeführt, ohne Reaktionsdosierung. Die Reaktion wurde bei Umgebungsdruck durchgeführt.

Das entstandende Produkt war kristallin und sichtbar braun, was klar auf eine Degradation hindeutet.

Eine Farbzahlmessung in Reflexion ergab einen L-Wert von 91, einen a-Wert von 0,3 und einen b-Wert von 8,1.

### Patentansprüche

1. Verfahren zur kontinuierlichen Herstellung von Hydroxy-terminierten Prepolymeren durch Umsetzung der Komponenten

    (A) einem oder mehreren cycloaliphatischen, aliphatischen und/oder araliphatischen Polyisocyanaten,
    (B) einem oder mehreren cycloaliphatischen, aliphatischen und/oder araliphatischen Polyolen, wobei die Gesamtmenge der Komponente (B) eine Hydroxylzahl von 600 mg KOH/g bis 1830 mg KOH/g bestimmt gemäß DIN EN ISO 4629-2:2016 aufweist,
    (C) gegebenenfalls in Gegenwart von einem oder mehreren Katalysatoren, und/oder einem oder mehreren Zusatzstoffen,

    wobei insgesamt ein molares Verhältnis von Komponente (A) zu Komponente (B) im Bereich von 0,6 : 1,0 bis 0,95 : 1,0 vorliegt, **dadurch gekennzeichnet, dass** das Verfahren die Schritte umfasst:

    a) Herstellen einer Mischung aus der Komponente (A), der Komponente (B) und ggf. der Komponente (C);
    b) Vermischen der im Verfahrensschritt a) hergestellten Mischung mit einem aus Verfahrensschritt e) erhaltenen Prepolymer-Ausgangsteilstrom;
    c) Zur Reaktion bringen der Mischung aus Verfahrensschritt b);
    d) Aufteilen der in Schritt c) erhaltenen Reaktionsmischung in zwei Ausgangsteilströme;
    e) Rückführen eines Ausgangsteilstromes aus Verfahrensschritt d) als Eingangsteilstrom für die Mischung im Verfahrensschritt b);
    f) Entnehmen des verbleibenden Ausgangsteilstrom des Verfahrensschrittes d) enthaltend die Hydroxy-terminierten Prepolymere.

2. Verfahren gemäß Anspruch 1, **dadurch gekennzeichnet, dass** als Komponente (A) ein oder mehrere aliphatische und / oder cycloaliphatische, monomere Diisocyanate mit einem Molekulargewicht im Bereich von $\geq$ 140 g/mol bis $\leq$ 400 g/mol eingesetzt werden.

3. Verfahren gemäß einem der vorhergehenden Ansprüche, **dadurch gekennzeichnet, dass** als Komponente (A) ein oder mehrere monomere Diisocyanate eingesetzt werden ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI) und/oder Mischungen aus mindestens 2 hieraus, vorzugsweise ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und besonders bevorzugt ausgewählt aus der Gruppe bestehend aus 1,5-Diisocyanatopentan (PDI), 1,6-Diisocyanatohexan (HDI) und/oder Mischungen aus mindestens 2 hieraus.

4. Verfahren gemäß einem der vorhergehenden Ansprüche, **dadurch gekennzeichnet, dass** als Komponente (B) eine oder mehrere cycloaliphatische, aliphatische und/oder araliphatische Polyole mit einer Hydroxylzahl von 600 mg KOH/g bis 1830 mg KOH/g bestimmt gemäß DIN EN ISO 4629-2:2016 eingesetzt werden, vorzugsweise dass als Komponente (B) ein oder mehrere cycloaliphatische und / oder aliphatische Diole, mit einer Hydroxylzahl von 600 mg KOH/g bis 1830 mg KOH/g bestimmt gemäß DIN EN ISO 4629-2:2016, eingesetzt werden.

5. Verfahren gemäß einem der vorhergehenden Ansprüche, **dadurch gekennzeichnet, dass** als Komponente (B) ein oder mehrere Diole eingesetzt werden ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, Diethylenglykol, und/oder Mischungen aus mindestens 2 hieraus, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, und/oder Mischungen aus mindestens 2 hieraus, besonders bevorzugt ausgewählt aus der Gruppe bestehend aus 1,2-Ethandiol, 1,2-Propandiol, 1,3-Propandiol, 1,2-Butandiol, 1,3-Butandiol, 1,4-Butandiol und/oder Mischungen aus mindestens 2 hieraus.

6. Verfahren gemäß einem der vorhergehenden Ansprüche, **dadurch gekennzeichnet, dass** die Temperatur im Verfahrensschritt a) größer oder gleich 25 °C und kleiner oder gleich 60 °C beträgt.

7. Verfahren gemäß einem der vorhergehenden Ansprüche, **dadurch gekennzeichnet, dass** die Temperatur im Verfahrensschritt c) größer oder gleich 170 °C und kleiner oder gleich 190 °C beträgt.

8. Verfahren gemäß einem der vorhergehenden Ansprüche, **dadurch gekennzeichnet, dass** das Gewichtsverhältnis der im Verfahrensschritt b) zurückgeführten Prepolymere bezogen auf die Menge an eingesetzter Mischung aus Komponente (A) und Komponente (B) größer oder gleich 10 und kleiner oder gleich 30 beträgt.

9. Verfahren gemäß einem der vorhergehenden Ansprüche, **dadurch gekennzeichnet, dass** mindestens die Verfahrensschritte b), c), d) und e) in einem Kreislaufreaktor durchgeführt werden.

10. Verfahren gemäß Anspruch 9, **dadurch gekennzeichnet, dass** der Kreislaufreaktor über eine Druckregelung verfügt und der Druck im Bereich von 2 bar absolut bis 11 bar absolut eingestellt wird.

11. Verfahren gemäß einem der Ansprüche 9 oder 10, **dadurch gekennzeichnet, dass** die Viskosität des Stoffstroms in dem Kreislaufreaktor unterhalb von 10 Pa·s, bevorzugt unterhalb von 3 Pa·s, besonders bevorzugt unterhalb von 1 Pa·s bei einer Messtemperatur von 190 °C und einer Frequenz von 10 Hz bestimmt gemäß ISO 6721-10:2015 liegt.

12. Verfahren gemäß einem der Ansprüche 9 bis 11, **dadurch gekennzeichnet, dass** der Kreislaufreaktor mindestens einen Wärmeübertrager aufweist mit einem Wärmeübertragungsvermögen, bezogen auf das gesamte Volumen des Kreislaufreaktors, von mehr als 10 kW/(m$^3$·K), bevorzugt von mehr als 15 kW/(m$^3$·K) und ganz besonders bevorzugt von mehr als 18 kW/(m$^3$·K).

13. Verfahren gemäß Anspruch 12, **dadurch gekennzeichnet, dass** der Kreislaufreaktor mindestens einen Wärmeübertrager aufweist und das Verhältnis von Wärmeübertrageroberfläche zu Kreislaufreaktoroberfläche > 0,3, vorzugsweise > 0,5 und bevorzugter > 0,65 beträgt.

14. Verfahren nach einem der Ansprüche 12 oder 13, **dadurch gekennzeichnet, dass** die Wärmeübertrageroberfläche im Reaktor einen durchschnittlichen k-Wert von > 50 W/(m$^2$·K), vorzugsweise > 100 W/(m$^2$·K) und bevorzugter > 250 W/(m$^2$·K) aufweist.

15. Verfahren nach einem der vorhergehenden Ansprüche, **dadurch gekennzeichnet, dass** die Hydroxyterminierten Prepolymere eine aus den Funktionalitäten der Edukte berechnete mittlere OH-Funktionalität von 1,8 bis 2,1, bevorzugt 1,95 bis 2,05, besonders bevorzugt 1,97 bis 2,0, ganz besonders bevorzugt 1,975 bis 2,0 aufweisen.

16. Verfahren nach einem der vorhergehenden Ansprüche, **dadurch gekennzeichnet, dass** die Hydroxy-terminierten Prepolymere im Wesentlichen durch Polyaddition von Kombinationen aus Komponente (A) und Komponente (B) gebildet werden ausgewählt aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,5-Diisocyanatopentan mit 1,6-Hexandiol, 1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol, 1,6-Diisocyanatohexan mit 1,5-Pentandiol und 1,6-Diisocyanatohexan mit 1,6-Hexandiol, vorzugsweise ausgewählt werden aus der Gruppe bestehend aus 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,6-Diisocyanatohexan mit 1,2-Ethandiol, 1,6-Diisocyanatohexan mit 1,2- und/oder 1,3-Propandiol und 1,6-Diisocyanatohexan mit 1,2-, 1,3- und/oder 1,4-Butandiol, besonders bevorzugt ausgewählt werden aus der Gruppe bestehend aus 1,5-Diisocyanatopentan mit 1,2- Butandiol, 1,3- Butandiol, 1,4-Butandiol und / oder Mischungen aus mindestens 2 hieraus und 1,6-Diisocyanatohexan mit 1,2- Butandiol, 1,3-Butandiol, 1,4-Butandiol und / oder Mischungen aus mindestens 2 hieraus.

17. Hydroxy-terminierte Prepolymere erhältlich oder erhalten durch eine Verfahren nach einem der Ansprüche 1 bis 16, wobei die Hydroxy-terminierten Prepolymere vorzugsweise durch Umsetzung von im Wesentlichen 1,6-Diisocyanatohexan mit 1,4- Butandiol erhalten werden.

18. Zusammensetzung enthaltend mindestens Hydroxy-terminierte Prepolymere nach Anspruch 17 und mindestens ein Additiv.

19. Verwendung von Hydroxy-terminierten Prepolymeren nach Anspruch 17 oder einer Zusammensetzung nach Anspruch 18 zur Herstellung von thermoplastischem Polyurethan.

**Figur 1**

**Figur 2**

**Europäisches Patentamt**
**European Patent Office**
**Office européen des brevets**

# EUROPÄISCHER RECHERCHENBERICHT

**Nummer der Anmeldung**

EP 19 21 6795

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 598 283 A1 (BAYER AG [DE]) 25. Mai 1994 (1994-05-25) * Ansprüche 1-6; Beispiele 3-12 * ----- | 1-19 | INV. C08G18/10 C08G18/32 C08G18/73 |
| | | | RECHERCHIERTE SACHGEBIETE (IPC) |
| | | | C08G |

Der vorliegende Recherchenbericht wurde für alle Patentansprüche erstellt

| Recherchenort | Abschlußdatum der Recherche | Prüfer |
|---|---|---|
| München | 17. Juni 2020 | Sütterlin, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 21 6795

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2020

| Im Recherchenbericht angeführtes Patentdokument | Datum der Veröffentlichung | Mitglied(er) der Patentfamilie | Datum der Veröffentlichung |
|---|---|---|---|
| EP 0598283 A1 | 25-05-1994 | EP 0598283 A1<br>JP H06206963 A | 25-05-1994<br>26-07-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011085944 A1
- WO 0114441 A
- EP 0519734 A
- DE 2901774 A


**In der Beschreibung aufgeführte Nicht-Patentliteratur**

- Polyurethane. Kunststoff Handbuch. Hanser Verlag, vol. 7, 99ff
- Makromolekulare Stoffe. **HOUBEN-WEYL.** Methoden der organischen Chemie. Georg Thieme Verlag, 1987, vol. E20, 1587-1593
- *Justus Liebigs Annalen der Chemie,* 1949, vol. 562, 75-136
- Polyurethane. **J.H. SAUNDERS ; K.C. FRISCH.** High Polymers. Verlag Interscience, 1962, vol. XVI
- **R. GÄCHTER ; U. H. MÜLLER.** Taschenbuch für Kunststoff-Additive. Hanser Verlag, 1990
- Polyurethane. **J.H. SAUNDERS ; K.C. FRISCH.** High Polymers. Verlag Interscience Publishers, 1962, vol. XVI